# EUROPEAN PATENT APPLICATION

(11) **EP 4 299 662 A1**
(43) Date of publication of application: **03.01.2024**
(21) Application number: 22181440.3
(22) Date of filing: 28.06.2022
(51) Int. Cl.: C08L 9/06, C08L 15/02, C08L 25/08

(54) **THERMOPLASTIC VULCANIZATES MADE OF POLYAMIDE AND BIMSM RUBBER**

(71) Applicant: Parker-Hannifin Corporation, Cleveland, OH 44124-4141 (US)
(72) Inventor: TONSON, Abraham, Avon, 44011 (US); JINDAL, Aditya, Cuyahoga Falls, 44221 (US); GRIMM, Jillanne J., Hudson (US); MALLAMACI, Michael P., North Canton, 44720 (US); NGUYEN, Kristina T., Youngstown, 44512 (US); RUSSELL, Kenneth W., Buford, 30519 (US)
(74) Representative: Murgitroyd & Company

(57) **Abstract**

Disclosed are thermoplastic vulcanizates comprising a plastic phase and a rubber phase and process for preparing such thermoplastic vulcanizates, wherein the plastic phase comprises a thermoplastic polymer and the rubber phase comprises a brominated poly(isobutylene-co-para-methylstyrene) rubber.

## Description

### FIELD

The present invention discloses compositions and methods for the preparation of thermoplastic vulcanizates (TPVs) that are resistant to permeation by refrigerants, coolants, and various other fluids. These TPVs can be prepared by the dynamic vulcanization of brominated poly(isobutylene-co-para-methylstyrene) rubber in high melting point, semi-crystalline thermoplastic materials, namely, nylons. This dynamic vulcanization can be carried out using addition-type curing agents that advantageously cure the rubber without the evolution of volatiles, without degradation of the plastic phase, and that facilitate rubber and plastic compatibilization The compositions of this invention can be readily produced and fabricated using commercially suitable plastics compounding and fabricating equipment to yield molded (by injection, extrusion or blow molding) parts with excellent surface appearance.

### BACKGROUND

The preparation of thermoplastic elastomers by dynamic vulcanization, i.e., thermoplastic vulcanizates (TPVs), although established over four decades ago, is still commercially viable with the use of only one plastic and rubber melt blend, namely isotactic polypropylene (PP) and ethylene/propylene/diene (EPDM) rubber.

Permeation-resistant polymers are used to manufacture a variety of products, such as, for example, gaskets, tubes, hoses, and seals. Current permeation-resistant hose core tubes are based on crosslinked butyl rubber; production of such core tubes requires extrusion onto a mandrel with a secondary cure process in an autoclave. Some permeation-resistance hoses also require a nylon inner layer that is relatively expensive. An alternative is a hose with the core made from a single layer of high temperature, permeation-resistant thermoplastic. However, this solution sacrifices desired flexibility. In addition, there is an increasing demand in the market for materials that can be used to form complex routings with higher permeation resistance than crosslinked rubber.

Therefore, there is a need for materials that do not require the above-mentioned manufacturing steps, are cost effective, and have superior strength, permeation resistance, and high flexibility.

Efforts have been made to develop materials that possess desirable characteristics of two or more materials, often by combining different materials into a single composition. The resulting compositions can be used, for example when making hoses and tubes, to form a single layer product that possesses the properties of a combination of materials. The use of a single material having all the characteristics of a dual-material product would simplify the manufacturing process. Thus, there is a need for permeation-resistant polymer materials that have the desirable characteristics resulting from a combination of multiple layers of rubber and nylon or thermoplastic materials.

Thermoplastic elastomer compositions comprising rubber and polyamide (nylon) have been disclosed. See, for example, U.S. Patent Nos. 6,359,071, 8,021,730, and 8,415,431, and U.S. Patent Application Publication No. 20080255310.

In addition, there is also a need for such compositions that can be made and processed on a commercial scale using a large scale-continuous system, e.g., a single-screw or a twin-screw extruder.

### Summary

This disclosure provides a convenient solution to the problems identified above.

In one aspect, this disclosure provides thermoplastic vulcanizate compositions, typically permeation-resistant thermoplastic vulcanizates that are readily processable. These TPVs are made by dynamic vulcanization of rubber with high melting point, semi-crystalline thermoplastic materials. The thermoplastic vulcanizates disclosed herein are typically resistant to permeation at a broad range of temperatures.

In another aspect, the semi-crystalline thermoplastic materials are selected from nylons.

In other aspects, the TPVs are made using addition-type curing agents that do not generate volatiles during cure, and do not degrade the plastic phase.

In other aspects, the TPVs are made using processing aids that allow ease of fabrication of the TPVs by plastic molding techniques such as injection molding, extrusion, and blow molding, and with excellent fabricated product surface appearance.

In a broad aspect, this disclosure provides thermoplastic vulcanizates comprising a plastic phase and a rubber phase, wherein
a) the plastic phase comprises from about 30 parts to about 95 parts by weight, based on 100 parts by weight of the plastic and rubber phases, of a plastic having a melting point of about 160°C to about 260°C, wherein the plastic is a semi-crystalline aliphatic polyamide, and
b) the rubber phase comprises from about 70 parts to about 5 parts, by weight based on 100 parts by weight of the plastic and rubber phases, of a brominated poly(isobutylene-co-para-methylstyrene) rubber; and
c) crosslinks between reactive groups in the brominated poly(isobutylene-co-para-methylstyrene) rubber.

In another aspect, the disclosure provides thermoplastic vulcanizates prepared by dynamically crosslinking a melt blend with an addition type curing agent, wherein the melt blend comprises a plastic phase and a rubber phase, and wherein
a) the plastic phase comprises from about 30 parts to about 95 parts by weight, based on 100 parts by weight of the plastic and rubber phases, of a plastic having a melting point of about 160°C to about 260°C, wherein the plastic is a semi-crystalline aliphatic polyamide and
b) the rubber phase comprises from about 70 parts to about 5 parts, by weight based on 100 parts by weight of the plastic and rubber phases, of a brominated poly(isobutylene-co-para-methylstyrene) rubber.

In another aspect, this disclosure provides a process for producing thermoplastic vulcanizates comprising mixing a composition comprising a plastic phase and a rubber phase with an addition type curing agent, wherein the mixing is carried out under mixing conditions that produce an appropriate shear profile and at a temperature above the melting point of the plastic phase, and wherein
a) the plastic phase comprises from about 30 parts to about 95 parts by weight, based on 100 parts by weight of the plastic and rubber phases, of a plastic having a melting point of about 160°C to about 260°C, wherein the plastic is a semi-crystalline aliphatic polyamide, and
b) the rubber phase comprises from about 70 parts to about 5 parts, by weight based on 100 parts by weight of the plastic and rubber phases, of a brominated poly(isobutylene-co-para-methylstyrene) rubber.

In another aspect, this disclosure provides thermoplastic elastomers comprising a plastic phase and a rubber phase, wherein
a) the plastic phase comprises from about 30 parts to about 95 parts by weight, based on 100 parts by weight of the plastic and rubber phases, of a plastic having a melting point of about 160°C to about 260°C, wherein the plastic is a semi-crystalline aliphatic polyamide, and
b) the rubber phase comprises from about 70 parts to about 5 parts, by weight based on 100 parts by weight of the plastic and rubber phases, of a brominated poly(isobutylene-co-para-methylstyrene) rubber; and
c) an optional plasticizer, wherein the amount of plasticizer, when present, is up to about 35 parts, based on 100 parts by weight of the plastic and rubber phases.

The thermoplastic elastomers are typically pre-vulcanized compositions and can be used as intermediates in the preparation of the disclosed fully vulcanized TPV products. These elastomers are pre-crosslinked compositions and are substantially free of cross-linked rubber material. The final thermoplastic vulcanizates of this disclosure can be made directly from the thermoplastic elastomers by mixing the elastomer composition with an addition-type curing agent and subjecting the resulting mixture to dynamic vulcanization, i.e., conditions of shear at a temperature above the melting point of the plastic component.

In a related aspect, this disclosure provides thermoplastic elastomers comprising a plastic phase and a rubber phase as defined above as well as an addition-type curing agent. These compositions can also be used in the manufacture of the fully vulcanized products by merely subjecting the compositions to dynamic vulcanization. The compositions of this disclosure are made using addition-type curing agents that advantageously cure the rubber without evolution of volatiles or degradation of the plastic phase, and that facilitate rubber and plastic compatibilization.

The compositions of this disclosure can be readily produced using conventional plastic compounding equipment. For example, the compositions of this disclosure can be prepared using a single-screw extruder or a co-rotating twin screw (TSE) extruder. Further, the processes of this disclosure do not require and preferably avoid a staged TPV preparation process.

Using conventional fabricating equipment (e.g., by injection, extrusion and blow molding equipment) the compositions described herein can be used to yield a variety of molded products. These products have excellent surface appearance.

The TPVs disclosed have excellent resistance to oils including hydrocarbon oils and are therefore suitable for a wide variety of uses. These TPVs do not exhibit the compositional, manufacturing, and use limitations discussed above.

### BRIEF DESCRIPTION OF THE FIGURES

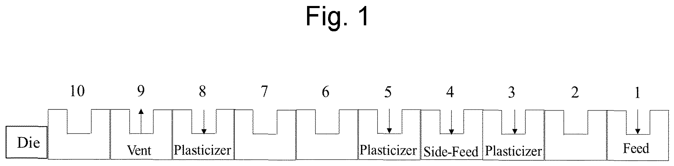

Figure 1 is a diagram of the barrel setup in the twin-screw extruder described and used in Example 1. The numbers refer to the barrels described in the examples.

### DETAILED DESCRIPTION

As used herein, the term thermoplastic vulcanizate (TPV) refers a thermoplastic elastomer produced via dynamic vulcanization of a blend of a rubber phase and a thermoplastic polymer in the presence of a vulcanizing system.

The acronym "BIMSM" used herein refers to brominated poly(isobutylene-co-para-methylstyrene) rubber.

The terms BIMSM, BIMSM rubber, brominated poly(isobutylene-co-para-methylstyrene) rubber, brominated poly(isobutylene-co-para-methylstyrene) elastomer, brominated poly(isobutylene-co-para-methylstyrene) terpolymers, and brominated poly(isobutylene-co-para-methylstyrene) are used interchangeably herein.

As used herein, the term "dynamic vulcanization" means a vulcanization or curing process for a rubber contained in a thermoplastic vulcanizate composition, wherein the rubber is vulcanized under mixing conditions that produce an appropriate shear profile and at a temperature above the melting point of the plastic component. The rubber is thus simultaneously cross-linked and typically dispersed as fine particles within the plastic matrix. Although particles are the typical morphology, other morphologies may also exist.

Thermoplastic vulcanizates typically have finely dispersed, micron-sized, crosslinked rubber particles distributed in a continuous thermoplastic matrix.

Unless otherwise specified, "parts" of a particular TPV component, e.g., plastic, rubber or curing agent, refers to parts by weight.

The disclosures of all patents and literature references identified herein are hereby incorporated by reference in their entirety.

As noted above, this disclosure provides thermoplastic vulcanizates comprising a plastic phase and a rubber phase.

In this aspect, Embodiment 1, the plastic phase comprises from about 30 parts to about 95 parts by weight, based on 100 parts by weight of the plastic and rubber phases, of a plastic having a melting point of about 160°C to about 260°C, wherein the plastic is a semi-crystalline aliphatic polyamide.

The rubber phase of Embodiment 1 comprises from about 70 parts to about 5 parts, by weight based on 100 parts by weight of the plastic and rubber phases, of a brominated poly(isobutylene-co-para-methylstyrene) rubber; and crosslinks between reactive groups in the brominated poly(isobutylene-co-para-methylstyrene) rubber.

In the thermoplastic vulcanizates of Embodiment 1, the crosslinks can be formed by a reaction between an addition type curing agent and the reactive groups in the brominated poly(isobutylene-co-para-methylstyrene) rubber.

In another embodiment, Embodiment 2, this disclosure provides thermoplastic vulcanizates prepared by dynamically crosslinking a melt blend with an addition type curing agent. The melt blend comprises a plastic phase and a rubber phase.

The plastic phase in Embodiment 2 comprises from about 30 parts to about 95 parts by weight, based on 100 parts by weight of the plastic and rubber phases, of a plastic having a melting point of about 160°C to about 260°C, wherein the plastic is a semi-crystalline aliphatic polyamide.

The rubber phase in Embodiment 2 comprises from about 70 parts to about 5 parts, by weight based on 100 parts by weight of the plastic and rubber phases, of a brominated poly(isobutylene-co-para-methylstyrene) rubber.

The thermoplastic polymers or plastics, i.e., nylons, used herein preferably have melting points between about 160°C or 170°C and about 260°C. The amount of plastic ranges from about 30 parts to 95 parts, and the amount of BIMSM ranges from about 70 parts to about 5 parts, based on 100 parts of plastic and rubber. In particular aspects, the amount of curing agent useful herein is from about 0.5 part to about 15 parts based on 100 parts of rubber and plastic.

In other aspects of embodiments 1 and 2, the plastic phase comprises about 30 parts to about 95 parts by weight, based on 100 parts by weight of the plastic and rubber phases, of the plastic, and the plastic has a melting point of about 160°C to about 260°C and is a semi-crystalline aliphatic polyamide, and the rubber phase comprises from about 70 parts to about 5 parts, by weight based on 100 parts by weight of the plastic and rubber phases, of the brominated poly(isobutylene-co-para-methylstyrene) rubber.

### Thermoplastic polymer

The thermoplastic polymers useful herein are desirably polar, crystalline or semi-crystalline, and have high melting points. The melting point of the thermoplastic polymers is between about 160°C and about 260°C. Thus, the thermoplastic polymers have melting points of about 160°C, about 170°C, about 180°C, about 190°C, about 200°C, about 210°C, about 220°C, about 230°C, about 240°C, about 250°C, or about 260°C. Suitable thermoplastic polymers include Nylons, in particular, aliphatic polyamides.

The molecular weight of a suitable thermoplastic polymer is such that it is a suitable engineering plastic. Accordingly, the weight averages molecular weight of the various Nylons generally range from about 40,000 to above 110,000 with from about 50,000 to about 100,000 being preferred.

Suitable amounts of plastic (thermoplastic polymer) based on 100 parts of plastic and rubber in the TPV formulations include from about 30-95 parts, from about 35-90 parts, from about 40-85 parts, from about 40-80 parts, from about 40-70 parts, about 30 parts, about 35 parts, about 40 parts, about 45 parts, about 50 parts, about 55 parts, about 60 parts, about 65 parts, about 70 parts, about 75 parts, about 80 parts, about 85 parts and about 90 parts.

### Aliphatic polyamide

Suitable polyamides for use as the thermoplastic material in the plastic phase include semi-crystalline aliphatic polyamides (condensation polymers of aliphatic diamines with aliphatic diacids, or polymers obtained by the polymerization of an AB monomer such as caprolactam) or copolyamides thereof, having melting points between about 160°C or 170°C and about 260°C. Suitable polyamides have medium to high molecular weights, i.e., molecular weights sufficient to produce with relative viscosities between about 2 to about 4, as measured in 96 weight per cent sulfuric acid at a 1 % concentration (mass of Nylon in volume of sulfuric acid). Particularly useful polyamides include polycondensation products of hexamethylenediamine and adipic acid (e.g., Nylon 6/6), hexamethylenediamine and 1,12-dodecanedioic acid (e.g., Nylon 6/12), and pentamethylene diamine and sebacic acid (e.g., Nylon 510). Other examples of suitable polyamide thermoplastic materials are poly(11-aminoundecanoic acid), i.e., Nylon 11, polycaprolactam, i.e., Nylon 6, polylaurolactam, i.e., Nylon 12, poly(hexamethylene adipamide-co-caprolactam), i.e., Nylon 6/66, and the product of acid-catalyzed amide formation between adiponitrile, formaldehyde, and water (Nylon 1,6). Examples of suitable polyamides are the Trogamid^{®} polyamides. Mixtures of these polyamides may suitably be used in the TPVs disclosed herein.

### BIMSM Rubber

Brominated poly(isobutylene-co-para-methylstyrene) (BIMSM" rubber useful in preparing the TPVs disclosed herein generally contain from 0.1 to 5 mol % of bromomethylstyrene groups relative to the total amount of monomer derived units in the copolymer. In any embodiment of the invention using BIMSM, the amount of bromomethyl groups is from 0.5 to 3.0 mol %, or from 0.3 to 2.8 mol %, or from 0.4 to 2.5 mol %, or from 0.5 to 2.0 mol %, wherein a desirable range for the present invention may be any combination of any upper limit with any lower limit. Also in accordance with the instant disclosure, the BIMSM polymer has 1.0 to 2.0 mol % bromomethyl groups or 1.0 to 1.5 mol % of bromomethyl groups. Expressed another way, exemplary BIMSM polymers useful in the present invention contain from 0.2 to 10 weight % of bromine, based on the weight of the polymer, or from 0.4 to 6 weight % bromine, or from 0.6 to 5.6 weight %. Useful BIMSM polymers may be substantially free of ring halogen or halogen in the polymer backbone chain. Suitable rubber grades for use herein are Exxpro 3035 (0.47 mol% benzylic bromine, ML (1+8, 125°C) = 45), Exxpro 3433 (0.75 mol% benzylic bromine, ML (1+8, 125°C) = 35), Exxpro 3563 (0.85 mol% benzylic bromine, ML (1+8, 125°C) = 35), and Exxpro 3745 (1.2 mol% benzylic bromine, ML (1+8, 125°C) = 45).

Suitable amounts of BIMSM based on 100 parts of plastic and rubber in the TPV formulations include from about 5-70 parts, from about 10-65 parts, from about 15-60 parts, from about 20-60 parts, from about 30-60 parts, about 70 parts, about 65 parts, about 60 parts, about 55 parts, about 50 parts, about 45 parts, about 40 parts, about 35 parts, about 30 parts, about 25 parts, about 20 parts, about 15 parts and about 10 parts.

### Addition type curing agent

The BIMSM rubber is cured during dynamic vulcanization utilizing various curative compounds such as, for example, oxazolines, oxazines, and imidazolines such as bisimidazoline. More specifically, without wishing to be bound by theory, it is believed that the brominated poly(isobutylene-co-para methylstyrene) is cured via the benzylic halide in the rubber, using addition type curing agents such as 1,3-phenylene-bis-oxazoline. Alternatively, the addition type curing agent can be a multifunctional epoxide.

Suitable addition type curing agents for use herein include those that do not break down the plastic phase and do not form volatile compounds such as water. Other curing agents can be utilized such as free radical generating compounds, but are less desirable and are therefore used in small amounts such as, for example, less than 1.0 parts by weight and desirably less than 0.5 parts by weight based upon 100 parts by weight of the BIMSM rubber. A highly preferred addition curative or cross-linking agent is the various oxazolines or oxazines such as those having Formula A or Formula B

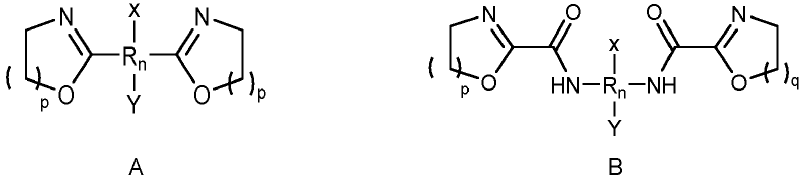

wherein R or R' is an aliphatic or aromatic hydrocarbon group such as alkylene or arylene having 1 to 24 carbon atoms optionally substituted with one or more alkyl groups having 1 to 6 carbon atoms or substituted with an aryl group having 6 to 9 carbon atoms; n is 0 or 1, when n equals 1 then X and Y are hydrogen atoms or independently an 2-oxazoline group or a 1,3-oxazine group, or a 2-oxazoline group or a 1,3-oxazine group and a hydrogen atom, with the remaining carbon atoms having hydrogen atoms thereon, p and q, independently, is 1 or 2, and when n equals 0 then R, X, and Y are nonexistent. Further, each oxazoline group of the above formula may optionally be substituted with an alkyl of 1 to 6 carbon atoms. Further descriptions of said polyvalent oxazolines are set forth in U.S. Pat. No. 4,806,588, herein incorporated by reference.

Various bismaleimides as well as phenolic resins can also be used as curatives. Examples of bismaleimides include a bismaleimide based on methylene dianiline (e.g., Matrimid 5292A from Ciba-Geigy), a bismaleimide based on toluene diamine (e.g., HVA-2 from DuPont), and the like. The phenolic curing agents are well known to the art and literature and include polymers obtained by the polymerization of phenol with formaldehyde. The polymerization rate is pH dependent, with the highest reaction rates occurring at both high and low pH. A more detailed description of the preparation of phenolic resins is set forth in "Principles of Polymerization" 3.sup.rd Edition, George Odian, pages 125-131, John Wiley Sons, Inc., N.Y., N.Y., 1991, which is hereby fully incorporated by reference. Examples of specific phenolic resins include those of formula C

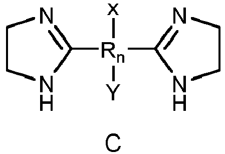

where R and n are defined as above for the multifunctional (polyvalent) oxazolines and X and Y, are a hydrogen atom, or, independently, an imidazoline group, or an imadazoline group and a hydrogen atom. A preferred multifunctional imidazoline is bismidazoline.

Particularly useful addition type curing agents for use herein are 2,2'-bis(2-oxazoline-2), 2,2'-(1,3-phenylene)bis(2-oxazoline) (1,3-PBO), 2,2'-(1,4-phenylene)bis(2-oxazoline) (1,4-PBO), and 2,2'-(2,6-pyridylene)bis(2-oxazoline) (2,6-PyBO), and mixtures thereof.

Still another group of addition type curatives are the various multifunctional epoxides such as the various Shell Epon^{®} resins, epoxidized vegetable oils, tris(2,3-epoxypropyl)isocyanate, and 4,4'-methylene bis(N,N-diglycidylaniline), and multifunctional aziridines. A particularly useful epoxide for use herein as the addition type curing agent is a styrene/glycidyl methacrylate copolymer.

Without wishing to be bound by theory, it is believed that oxazolines such as 1,3-PBO and 2,6-PyBO react via the oxazoline ring nitrogen with the benzylic halide in the rubber to form amine salt cross-links. Nylons can also be linked to the rubber by reaction of its amine end groups with the benzylic halide in the rubber, but the reaction between the curing agent and the rubber is more favorable.

In certain embodiments, the curing agent, typically an excess of the curing agent relative to plastic, can be melt blended with the plastic to produce a blend of curative and plastic.

The amount of the curative or curing agent is generally from about 0.5 to 15, desirably from 3 to 12 parts by weight for every 100 parts by weight of the rubber and the plastic phases. Suitable amounts of curing agent include about 0.5, 1, 2, 3, 4, 5, 6, 7, 8, 9, 10, 11, 12, 13, 14 and 15 parts by weight for every 100 parts by weight of the rubber and the plastic phases. Particularly useful amounts of curing agent range from about 0.5 part to about 15 parts based on 100 parts of rubber and plastic.

In certain aspects, oxazoline curing agents are used to avoid degradation of the TPV plastic phase and allow selective addition crosslinking of the rubber. In certain aspects, oxazoline curing agents avoid product processability problems that can be caused by volatile by-products from the curing reaction being trapped in the TPV melt.

Without wishing to be bound by theory, it is believed that the addition curatives affect cross-linking by reacting with the benzylic halide groups present in the brominated poly(isobutylene-co-para-methylstyrene) rubber. The amount of curative used results in at least a partially cured brominated poly(isobutylene-co-para-methylstyrene) rubber and preferably a fully or completely vulcanized brominated poly(isobutylene-co-para-methylstyrene) rubber.

The terms "fully vulcanized" and "completely vulcanized" as used in the specification and claims means that the rubber component to be vulcanized has been cured to a state in which the elastomeric properties of the cross-linked rubber are similar to those of the rubber in its conventional vulcanized state, apart from the thermoplastic vulcanizate composition, or as indicated by no more change in tensile strength. The degree of cure can be described in terms of gel content or, conversely, extractable components. Alternatively, the degree of cure may be expressed in terms of cross-link density. All of these descriptions are well known in the art, for example, in U.S. Pat. Nos. 5,100,947 and 5,157,081, both of which are fully incorporated herein by this reference. By the term "partially vulcanized" (i.e., degree of cure), it is meant that about 30 percent or less and desirably about 10 percent or less by weight of the BIMSM rubber is soluble in methyl ethyl ketone at 80°C. By the term "fully vulcanized" (i.e., degree of cure), it is meant that about 5 percent or less of the cured brominated poly(isobutylene-co-para-methylstyrene) rubber is soluble in a methyl ethyl ketone at 80°C.

### Plasticizer

Thermoplastic vulcanizates of Embodiments 1 and 2 can further comprise a plasticizer that is melt miscible with both the rubber phase and the plastic phase. Suitable plasticizers for use herein are selected from benzoates, sulfonamides, and mixtures thereof. Plasticizers that are melt miscible with the TPV plastic phase, or rubber phase, or both, are useful in certain aspects of this disclosure. In certain embodiments, the plasticizer is not melt-miscible with either the rubber phase or the plastic phase.

When present, the amount of plasticizer ranges from about 4 parts to about 35 parts, based on 100 parts of rubber and plastic phases in the formulation. Suitable amounts of plasticizer, based on 100 parts of rubber, in the TPV formulations are about 4 parts, about 10 parts, about 15 parts, about 20 parts, about 25 parts, about 30 parts, and about 35 parts.

In certain aspects of this disclosure, TPV formulations comprise about 30 parts to about 95 parts of plastic, and from about 70 parts to about 5 parts of BIMSM, in addition to an effective amount of a plasticizer. Effective amounts of the plasticizer are from about 4 parts or 8 parts to about 35 parts per 100 parts of rubber and plastic phases.

In certain embodiments which include plasticizer, the melt blend comprises about 30 parts to about 40 parts by weight, based on 100 parts by weight of the plastic and rubber phases, of a nylon, and 70 parts to about 60 parts, by weight based on 100 parts by weight of the plastic and rubber phases, of BIMSM.

In certain embodiments which include plasticizer, the melt blend comprises about 35 parts to about 45 parts by weight, based on 100 parts by weight of the plastic and rubber phases, of a nylon, and 65 parts to about 55 parts, by weight based on 100 parts by weight of the plastic and rubber phases, of BIMSM.

In certain embodiments which include plasticizer, the melt blend comprises about 40 parts to about 50 parts by weight, based on 100 parts by weight of the plastic and rubber phases, of a nylon, and 60 parts to about 50 parts, by weight based on 100 parts by weight of the plastic and rubber phases, of BIMSM.

In certain embodiments which include plasticizer, the melt blend comprises about 45 parts to about 55 parts by weight, based on 100 parts by weight of the plastic and rubber phases, of a nylon, and 55 parts to about 45 parts, by weight based on 100 parts by weight of the plastic and rubber phases, of BIMSM.

In certain embodiments which include plasticizer, the melt blend comprises about 55 parts to about 65 parts by weight, based on 100 parts by weight of the plastic and rubber phases, of a nylon, and 45 parts to about 35 parts, by weight based on 100 parts by weight of the plastic and rubber phases, of BIMSM.

In certain embodiments which include plasticizer, the melt blend comprises about 60 parts to about 75 parts by weight, based on 100 parts by weight of the plastic and rubber phases, of a nylon, and 40 parts to about 25 parts, by weight based on 100 parts by weight of the plastic and rubber phases, of BIMSM.

In certain embodiments which include plasticizer, the melt blend comprises about 65 parts to about 75 parts by weight, based on 100 parts by weight of the plastic and rubber phases, of a nylon, and 35 parts to about 25 parts, by weight based on 100 parts by weight of the plastic and rubber phases, of BIMSM.

In certain embodiments which include plasticizer, the melt blend comprises about 70 parts to about 80 parts by weight, based on 100 parts by weight of the plastic and rubber phases, of a nylon, and 30 parts to about 20 parts, by weight based on 100 parts by weight of the plastic and rubber phases, of BIMSM.

In certain embodiments which include plasticizer, the melt blend comprises about 75 parts to about 85 parts by weight, based on 100 parts by weight of the plastic and rubber phases, of a nylon, and 25 parts to about 15 parts, by weight based on 100 parts by weight of the plastic and rubber phases, of BIMSM.

In certain embodiments which include plasticizer, the melt blend comprises about 80 parts to about 90 parts by weight, based on 100 parts by weight of the plastic and rubber phases, of a nylon, and 20 parts to about 10 parts, by weight based on 100 parts by weight of the plastic and rubber phases, of BIMSM.

In certain embodiments which include plasticizer, the melt blend comprises about 85 parts to about 95 parts by weight, based on 100 parts by weight of the plastic and rubber phases, of a nylon, and 15 parts to about 5 parts, by weight based on 100 parts by weight of the plastic and rubber phases, of BIMSM.

Examples of such formulations include those containing BIMSM and plastic at a rubber to plastic weight ratio of about 1.1 to about 1.35 (about 52-57 parts rubber to about 48-43 parts plastic) and about 4 parts to about 35 parts, based on 100 parts of the rubber and plastic phases, of a plasticizer.

In certain aspects, a plasticizer is incorporated into the TPV formulation to achieve processable (low enough melt viscosity, excellent fabricated product surface appearance) TPV compositions with plastic content of about 70 weight per cent or lower, based on only the rubber and plastic in the composition. In certain situations, at this level of plastic, lack of plasticizer results in some molding machines being incapable of fabricating the TPV melt due to high viscosity, or the fabricated product exhibits severe melt fracture. The plasticizer is preferably miscible with the TPV plastic phase only, although plasticizers that are miscible with both the TPV rubber and plastic phase are also acceptable.

Plasticizers useful herein with nylon (aliphatic polyamide) materials may be solid or liquid at ambient temperature. Examples of these plasticizers include benzenesulfonamide (solid at room temperature) and various N-alkylbenzenesulfonamides (solid or liquid at room temperature). N-butylbenzenesulfonamide (Uniplex 214) and N-ethyl-o/p-toluenesulfonamide (Uniplex 108) are liquids, while certain N-alkyl-p-toluenesulfonamides are solids. Other suitable solid plasticizers for nylon include methyl or propyl 4-hydroxybenzoate.

Plasticizers that are melt-miscible with the TPV plastic phase only tend to increase the plastic melt volume which helps in preventing rubber particle agglomeration. Prevention of rubber particle agglomeration is useful when intensive melt mixing of the TPV stops as the product is pumped into a die for strand formation, and subsequent strand cutting into pellets. Increased plastic phase volume also facilitates phase inversion during dynamic vulcanization, which is useful in achieving a plastic continuous TPV phase. In certain aspects herein, a plasticizer is useful for producing molten strands with smooth surfaces and no or limited melt fractures.

Other suitable nylon plasticizers are described in Polymer International, 51, 40-49 (2001); Polym. Bull., 68, 1977-1988 (2012); Polym. Adv. Technol., 23, 938-945 (2012); and Polym. Adv. Technol., 28, 53-58 (2017).

In certain embodiments, the aliphatic polyamide is a polycaprolactam, polylaurolactam, poly(11-aminoundecanoic acid), a polyamide derived from hexamethylenediamine and adipic acid, poly(hexamethylene adipamide-co-caprolactam, or a mixture thereof, and the plasticizer is N-(n-butyl)benzenesulfonamide and the thermoplastic vulcanizate comprises about 4 to 35 parts, based on 100 parts of plastic and rubber, of the plasticizer, or the plasticizer is methyl 4-hydroxybenzoate and the thermoplastic vulcanizate comprises about 5 to 20 parts of the plasticizer based on 100 parts of plastic and rubber.

Also acceptable for use herein are plasticizers that are melt miscible with the TPV plastic phase, but are immiscible in the amorphous plastic phase of the TPV at room temperature, and hence may be present as sub-micron pools of liquid in the TPV plastic phase at room temperature, but show no tendency for exudation from TPV pellets or molded parts produced from the TPV.

### Processing aid

The thermoplastic vulcanizates of Embodiments 1 and 2 can include a processing aid.

Suitable processing aids include maleated polyolefins and maleated vinylidene fluoride polymers or copolymers.

Other suitable processing aids are polypropylene, polyethylene, or vinylidene fluoride/hexafluoropropylene copolymer with 0.1 weight % to about 3 weight % of maleate group content.

Suitable amounts of processing aid are from about 4 to about 35 parts based on 100 parts by weight of the plastic and rubber phases. Particularly suitable amounts of processing aid, based on 100 parts of rubber and plastic, in the TPV formulations are about 0.5 to 25 parts, 0.5 to 30 parts, 0.5 to 35 parts, about 0.5 to 15 parts, about 0.5 to 12 parts, about 1 part, about 2 parts, about 3 parts, about 4 parts, about 5 parts, about 6 parts, about 7 parts, about 8 parts, about 9 parts, about 10 parts, about 11 parts, about 12 parts, about 13 parts, about 14 parts, about 15 parts, about 16 parts, about 17 parts, about 18 parts, about 19 parts, about 20 parts, about 25 parts, about 30 parts, or about 35 parts.

When used, the processing aid is typically combined with the nylon prior to compounding; this permits the processing aid to modify the nylon before the vulcanization process.

### Cure Accelerators

In certain aspects, the thermoplastic vulcanizates disclosed herein can further comprise a cure accelerator selected from aryl phosphites, alkyl phosphites, aryl/alkyl phosphite, and mixtures thereof. Particular cure accelerators suitable for use herein are selected from tris(2,4-di-*t*-butylphenyl) phosphite, bis(2,4-di-*t*-butylphenyl)pentaerythritol diphosphite, and mixtures thereof.

### Optional Additives

In addition to the thermoplastic polymer, brominated poly(isobutylene-co-para-methylstyrene) rubber, the processing aid, the cure activator, and the curing agent, the thermoplastic vulcanizates disclosed herein can include various conventional additives such as reinforcing and non-reinforcing fillers, extenders, antioxidants, antiozonants, stabilizers, rubber processing oil, extender oils, lubricants, plasticizers, anti-blocking agents, anti-static agents, waxes, foaming agents, pigments, flame retardants and other processing aids known in the rubber compounding art. Such additives can comprise up to about 60 weight percent of the total composition, and can be in the plastic phase, the rubber phase or both. Fillers and extenders which can be utilized include conventional inorganics such as calcium carbonate, clays, silica, talc, titanium dioxide, carbon black, and the like. The rubber processing oils generally are paraffinic, naphthenic or aromatic oils derived from petroleum fractions. The type will be that ordinarily used in conjunction with the specific rubber or rubbers present in the compositions, and the quantity based on the total rubber content may range from zero to about 100 phr and preferably from about 10 to about 40 phr.

In certain embodiments of this disclosure, the crosslinks are formed by a reaction between an addition type curing agent and reactive groups in the brominated poly(isobutylene-co-para-methylstyrene) rubber.
In certain embodiments of this disclosure, the plastic phase comprises 30 parts to 70 parts, 40 parts to 70 parts, 35 parts to 60 parts, 40 parts to 60 parts, 55 parts to 85 parts or 70 parts to 95 parts by weight, based on 100 parts by weight of the plastic and rubber phases, of a plastic, and the plastic has a melting point of 160°C to 260°C and is a semi-crystalline aliphatic polyamide, and
the rubber phase comprises from 70 parts to 30 parts, 60 parts to 30 parts, 65 parts to 40 parts, 60 parts to 40 parts, 45 parts to 15 parts or 30 parts to 5 parts, by weight based on 100 parts by weight of the plastic and rubber phases, of the brominated poly(isobutylene-*co*-*para*-methylstyrene) rubber.

In certain embodiments of this disclosure, the plastic phase comprises 30 parts to 95 parts by weight, based on 100 parts by weight of the plastic and rubber phases, of a plastic, and the plastic has a melting point of 160°C to 260°C and is a semi-crystalline aliphatic polyamide, and
the rubber phase comprises from 70 parts to 5 parts, by weight based on 100 parts by weight of the plastic and rubber phases, of the brominated poly(isobutylene-co-para-methylstyrene) rubber.

In certain embodiments of this disclosure, the thermoplastic vulcanizate further comprises a plasticizer.

In certain embodiments of this disclosure, the plasticizer is selected from benzoates, sulfonamides, and mixtures thereof.

In certain embodiments of this disclosure, the amount of plasticizer in the thermoplastic vulcanizate is from 4 parts to 35 parts, 4 parts to 20 parts or 6 parts to 18 parts based on 100 parts by weight of the plastic and rubber phases.

In certain embodiments of this disclosure, the plasticizer is capable of functioning as a plasticizer for one or both of the plastic phase or rubber phase at the plastic melt temperature.

In certain embodiments of this disclosure, the addition type curing agent is a multifunctional oxazoline or epoxide.

In certain embodiments of this disclosure, the thermoplastic vulcanizate comprises from 0.5 parts to 15 parts, 1 part to 12 parts or 1 part to 8 parts based on 100 parts by weight of the plastic and rubber phases, of the addition type curing agent.
In certain embodiments of this disclosure, the addition type curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or mixtures thereof.

In certain embodiments of this disclosure, the aliphatic polyamide is a polycaprolactam, polylaurolactam, poly(11-aminoundecanoic acid), a polyamide derived from hexamethylenediamine and adipic acid, poly(hexamethylene adipamide-co-caprolactam, or a mixture thereof.

In certain embodiments of this disclosure, the plasticizer is N-(n-butyl)benzenesulfonamide and the thermoplastic vulcanizate comprises 4 to 35 parts, based on 100 parts by weight of the plastic and rubber phases, of the plasticizer, or the plasticizer is methyl 4-hydroxybenzoate and the thermoplastic vulcanizate comprises 4 to 20 parts of the plasticizer.

In certain embodiments of this disclosure, the thermoplastic vulcanizate further comprises a cure accelerator selected from aryl phosphites, alkyl phosphites, aryl/alkyl phosphite, and mixtures thereof.

### Use

The thermoplastic vulcanizate compositions of this disclosure can be used in applications wherever permeation-resistant polymer is needed. The thermoplastic vulcanizates disclosed herein may be formed into a variety of products, including for example gaskets, tubes, hose, boots, seals, vibration dampeners, stators, fittings, housings, cases, films, shock absorbers, anti-vibration mounts, couplings, bushings, sleeves, bellows, foams, etc. The thermoplastic vulcanizates disclosed herein are particularly useful for manufacturing tubes and hoses comprising at least one layer comprising thermoplastic vulcanizate. The thermoplastic vulcanizates disclosed herein are particularly useful for use in automobiles.

Thus, they can be utilized as seals, as gaskets, hoses, boots, and the like, especially for automotive applications. The TPVs of this disclosure are particularly useful for making hoses, especially hoses that comprise multiple layers wherein at least one layer is a jacket or core tube formed from a TPV of this disclosure. The jacket or core tube can include one or more layers formed from a TPV of this disclosure (where multiple jacket or core tube layers may be the same or a different TPV of this disclosure), optionally in combination with a jacket or core tube layer made from one or more other materials.

The invention will be better understood by reference to the following examples which serve to illustrate, but not to limit, the present invention.

### Process

This disclosure also provides processes for producing thermoplastic vulcanizate. In certain embodiments, the processes comprise mixing a composition comprising a plastic phase and a rubber phase with an addition type curing agent. The mixing is typically carried out under mixing conditions that produce an appropriate shear profile and at a temperature above the melting point of the plastic phase.

This invention is best practiced using equipment that can blend polymeric materials at a shear rate that permits intimate material melt blending, but at a shear rate that is low enough to prevent excessive material thermal and thermo-oxidative degradation, and also mechano-chemical degradation, due to shearing forces. The residence time (about 1-2 minutes) of the polymer melt blend in the production equipment is also comparable to that used in commercially viable TPV manufacturing processes.

Adequate process temperature control and polymer melt blending using minimal shearing of the polymer melt blend is advantageous. The TPVs disclosed herein can be prepared using corotating or counter rotating twin screw extruders (TSEs), with elements that allow excellent polymer melt blending at low shear rate conditions (<5000 s⁻¹).

A particularly suitable single screw extruder for preparation of the TPVs of this invention is the Buss Kneader. Here, a reciprocating single screw, where the screw shaft consists of different elements (kneading, conveying, etc.) shears the polymer melt blend by the action of the screw elements on fixed (but adjustable) pins on the extruder barrel. Thus, intense polymer melt blending can be achieved at a low shear rate (<1100 s⁻¹), resulting in excellent polymer melt temperature control. Owing to the low shear rate profile of the Buss when compared to TSEs, the former machine is much less torque limited than the latter.

The plastic phase useful in the processes comprises from about 30 parts to about 95 parts by weight, based on 100 parts by weight of the plastic and rubber phases, of a semi-crystalline aliphatic polyamide.

Then rubber phase useful in the processes for preparing the thermoplastic vulcanizate comprises from about 70 parts to about 5 parts, by weight based on 100 parts by weight of the plastic and rubber phases, of a brominated poly(isobutylene-co-para-methylstyrene) rubber.

A desirable degree of cross-linking, i.e., partial or complete, can be achieved by adding one or more of the above-noted rubber curatives to the blend of a thermoplastic and brominated poly(isobutylene-co-para-methylstyrene) rubber and vulcanizing the rubber to the desired degree under conventional vulcanizing conditions, preferably using dynamic vulcanization. Dynamic vulcanization is affected by mixing the thermoplastic vulcanizate components at elevated temperature in conventional mixing equipment such as roll mills, Banbury mixers, Brabender mixers, continuous mixers, mixing extruders, and the like. The unique characteristic of dynamically cured compositions is that, notwithstanding the fact that the rubber component is partially or fully cured, the compositions can be processed and reprocessed by conventional plastic processing techniques such as extrusion, injection molding, blow molding and compression molding. Scrap or flashing can be salvaged and reprocessed.

In certain embodiments of the processes disclosed herein, the rubber phase and the plastic phase are melt blended prior to the addition of the addition type curing agent.

In certain embodiments of the processes disclosed herein, the rubber phase and the plastic phase are melt blended while the curing agent is added to the composition.

Alternatively, the rubber, plastic, and curative can be melt mixed simultaneously, instead of the normal procedure of adding the curative to the rubber and plastic melt blend.

In certain embodiments, the melt blend comprises about 30 parts to about 40 parts by weight, based on 100 parts by weight of the plastic and rubber phases, of a nylon, and 70 parts to about 60 parts, by weight based on 100 parts by weight of the plastic and rubber phases, of BIMSM.

In certain embodiments, the melt blend comprises about 35 parts to about 45 parts by weight, based on 100 parts by weight of the plastic and rubber phases, of a nylon, and 65 parts to about 55 parts, by weight based on 100 parts by weight of the plastic and rubber phases, of BIMSM.

In certain embodiments, the melt blend comprises about 40 parts to about 50 parts by weight, based on 100 parts by weight of the plastic and rubber phases, of a nylon, and 60 parts to about 50 parts, by weight based on 100 parts by weight of the plastic and rubber phases, of BIMSM.

In certain embodiments, the melt blend comprises about 45 parts to about 55 parts by weight, based on 100 parts by weight of the plastic and rubber phases, of a nylon, and 55 parts to about 45 parts, by weight based on 100 parts by weight of the plastic and rubber phases, of BIMSM.

In certain embodiments, the melt blend comprises about 55 parts to about 65 parts by weight, based on 100 parts by weight of the plastic and rubber phases, of a nylon, and 45 parts to about 35 parts, by weight based on 100 parts by weight of the plastic and rubber phases, of BIMSM.

In certain embodiments, the melt blend comprises about 60 parts to about 75 parts by weight, based on 100 parts by weight of the plastic and rubber phases, of a nylon, and 40 parts to about 25 parts, by weight based on 100 parts by weight of the plastic and rubber phases, of BIMSM.

In certain embodiments, the melt blend comprises about 65 parts to about 75 parts by weight, based on 100 parts by weight of the plastic and rubber phases, of a nylon, and 35 parts to about 25 parts, by weight based on 100 parts by weight of the plastic and rubber phases, of BIMSM.

In certain embodiments, the melt blend comprises about 70 parts to about 80 parts by weight, based on 100 parts by weight of the plastic and rubber phases, of a nylon, and 30 parts to about 20 parts, by weight based on 100 parts by weight of the plastic and rubber phases, of BIMSM.

In certain embodiments, the melt blend comprises about 75 parts to about 85 parts by weight, based on 100 parts by weight of the plastic and rubber phases, of a nylon, and 25 parts to about 15 parts, by weight based on 100 parts by weight of the plastic and rubber phases, of BIMSM.

In certain embodiments, the melt blend comprises about 80 parts to about 90 parts by weight, based on 100 parts by weight of the plastic and rubber phases, of a nylon, and 20 parts to about 10 parts, by weight based on 100 parts by weight of the plastic and rubber phases, of BIMSM.

In certain embodiments, the melt blend comprises about 85 parts to about 95 parts by weight, based on 100 parts by weight of the plastic and rubber phases, of a nylon, and 15 parts to about 5 parts, by weight based on 100 parts by weight of the plastic and rubber phases, of BIMSM.

In certain embodiments of the processes disclosed herein, the maximum shear rate in the process is less than 10,000 s⁻¹, or 7000 s⁻¹ or 3000 s⁻¹. In other embodiments, the maximum shear rate is less than 5000s⁻¹.

In certain embodiments of the processes disclosed herein, the composition further comprises a cure accelerator selected from aryl phosphites, alkyl phosphites, aryl/alkyl phosphite, and mixtures thereof. Particular cure accelerators suitable for use in the processes disclosed herein are selected from tris(2,4-di-*t*-butylphenyl) phosphite, bis(2,4-di-*t-*butylphenyl)pentaerythritol diphosphite, and mixtures thereof.

In certain embodiments of the processes disclosed herein, the cure accelerator is added to the mixture at any time during the process.

In certain embodiments of the processes disclosed herein, a plasticizer as described above can be introduced as plasticizer when convenient and appropriate during the process.

In certain embodiments, the thermoplastic vulcanizate described herein is prepared by dynamically crosslinking a melt blend with an addition type curing agent, wherein the melt blend comprises the plastic phase and the rubber phase, and wherein the crosslinks are formed by a reaction between an oxazoline curing agent and reactive groups in the brominated poly(isobutylene-co-para-methylstyrene) rubber.

In another aspect, this disclosure provides a thermoplastic elastomer comprising a plastic phase and a rubber phase, wherein
a) the plastic phase comprises from 30 parts to 95 parts by weight, based on 100 parts by weight of the plastic and rubber phases, of a plastic having a melting point of 160°C to 260°C, wherein the plastic is a semi-crystalline aliphatic polyamide; and
b) the rubber phase comprises from 70 parts to 5 parts, by weight based on 100 parts by weight of the plastic and rubber phases, of a brominated poly(isobutylene-co-para-methylstyrene) rubber; and
c) optionally the elastomer comprises crosslinks between reactive groups in the brominated poly(isobutylene-co-para-methylstyrene) rubber.

In a further aspect, this disclosure provides a gasket, tube, hose, seal, vibration dampener, stator, fitting, housing, case, film, shock absorber, anti-vibration mount, coupling, bushing, sleeve, or bellows, or foam comprising a thermoplastic vulcanizate according the claims herein or a thermoplastic elastomer according to the claims herein.

In still another aspect, this disclosure provides a process for producing a thermoplastic vulcanizate comprising mixing a composition comprising a plastic phase and a rubber phase with an addition type curing agent, wherein the mixing is carried out under mixing conditions that produce an appropriate shear profile and at a temperature above the melting point of the plastic phase, and wherein
the plastic phase comprises from 30 parts to 95 parts by weight, based on 100 parts by weight of the plastic and rubber phases, of a plastic having a melting point of 160°C to 260°C, wherein the plastic is a semi-crystalline aliphatic polyamide, and
the rubber phase comprises from 70 parts to 5 parts, by weight based on 100 parts by weight of the plastic and rubber phases, of a brominated poly(isobutylene-co-para-methylstyrene) rubber.

The present invention will be better understood by reference to the following examples, which serve to illustrate, but not limit, the practice of this invention.

### Examples

### General Procedure

Figure 1 is a diagram of the barrels of a twin-screw extruder suitable for use in the following examples. The equipment blends polymeric materials at a shear rate that permits intimate material melt blending, but at a shear rate that is low enough to prevent excessive material thermal and thermo-oxidative degradation, and also mechano-chemical degradation, due to shearing forces. The residence time of the polymer melt blend in the production equipment is about 2 minutes.

Plastic pellets and granulated rubber (dusted with clay) are fed into the throat of a 26 mm co-rotating twin screw extruder. After intimate rubber and plastic melt blending is achieved, addition type curing agent (1,3-PBO or 2,6-PyBO) is fed into the polymer melt blend with intensive mixing which initiates the dynamic vulcanization process. Precautions (barrel cooling, screw design) are taken to limit shear heating (due to the viscous drag of the molten plastic over the newly formed cross-linked rubber particles) in the dynamic vulcanization zone as the BIMSM is broken up into cross-linked particulate rubber, about 1µm to 10µm in diameter.

When used, plasticizer may be added to the polymer melt blend prior to dynamic vulcanization for temperature control, provided that curative dilution due to plasticizer addition does not preclude completion of cure in the dynamic vulcanization zone. Alternatively, part or all of the plasticizer can be added downstream after completion of dynamic vulcanization.

The curing agent, typically a powder, can be supplied directly to the extruder feed throat. Alternatively, the curing agent can be supplied as a powder coating or dusting on the rubber granules. As another alternative, the curing agent may also be added to the melt blend of rubber and plastic in barrel #4 or another barrel downstream.

### Materials

### Rubber Material

| **Trade Name** | **Description** |
|---|---|
| Exxpro 3035 | ExxonMobil: Baled Rubber, 0.47 mol% benzylic bromine, ML(1+4, 125°C)=45 |

### Plastic Material

| **Trade Name** | **Description** |
|---|---|
| Vestamid L2101F | EVONIK: (Pellets) Nylon 12, m.p. = 178°C, High-viscosity film grade. |
| Rilsan BESNO TL | Arkema: (Pellets) Nylon 11, m.p. = 189°C, Melt Volume Rate (cm³/10 min(@),235⁰C/2.16 kg): 1. |
| Rilsan AESNO P40 TL | Arkema: (Pellets) Nylon 12, m.p. = 174°C, Melt Volume Rate (cm³/10 min@235⁰C/5 kg): 16. |

### Processing Aid

| **Trade Name** | **Description** |
|---|---|
| L4180 | Optimized Grafts: (Pellets) Linear-low density polyethylene-g-maleic anhydride (2.0-3.0 wt%), Melt Flow Rate (190°C, 2.16 kg) = 1.7 cm³/10min |
| Tafmer MA8510 | MITSUI: (Pellets) Acid modified polyolefin, Melt Flow Rate (190°C, 2.16 kg) = 2.4 g/10min |

### Plasticizer

| **Trade Name** | **Description** |
|---|---|
| Uniplex 214 | LANXESS: (Liquid) N-n-butylbenzene sulfonamide, b.p. 314°C (BBSA). |

### Curing Agent

| **Trade Name** | **Description** |
|---|---|
| 1,3-PBO | EVONIK: (Powder). 2,2'-(1,3-Phenylene)bis (oxazoline-2), m.p.= 147°C-151°C. |
| Zinc Stearate | Akrochem: (Powder). Zinc Carboxylate of Stearic (C-18) and Palmitic (C-16) acids, m.p.= 130°C. |

### Antioxidant

| **Trade Name** | **Description** |
|---|---|
| Irganox 1098 | BASF: (Powder). N,N'-hexane-1,6-diylbis(3-3,5-di-tert-butyl-4-hydroxyphenylpropionamide) |

### Cure Activator

| **Trade Name** | **Description** |
|---|---|
| Zinc Oxide | Akrochem: (Powder), m.p.= 1975°C. |

### TPV compounding/extrusion

The Nylon/BIMSM TPVs of this disclosure can be compounded in a batch mixer (e.g. RSI's Techmix 6) or a in continuous twin-screw extruder (e.g. Coperion ZSK 26) or a reciprocating kneader (e.g. BUSS Kneader MX-30).

TPVs of this disclosure made with Nylon and BIMSM are reactively compounded on a ZSK 26 mm, 10-barrel, co-rotating, Coperion two-lobe twin screw extruder having a L/D = 40 and barrels such as those shown in Figure 1. The maximum torque per screw shaft for this extruder is 106 Nm, the maximum allowable horsepower is 36 HP, and the maximum allowable screw speed is 1200 RPM.

The barrels of this extruder are:
Barrel #1 (Unheated): Conveying elements
Barrel #s 2 -3: Kneading elements to melt plastic materials and to produce an intimate rubber and plastic melt blend.
Barrel #s 4-8: Dynamic vulcanization zone: a combination of kneading elements ensures intensive polymer melt blending during dynamic vulcanization, while limiting rise in polymer melt blend temperature and pressure.
Barrel #s 9-10: Conveying elements.

### Die: 3-hole

Material is fed into the extruder at an appropriate feed rate and screw speed selected to permit sufficient residence time for dynamic vulcanization to take place.

Plastic pellets and clay-dusted granulated rubber are fed into the hopper attached to barrel #1. Curing agent, 1,3-PBO, Irganox 1098, and Zinc Oxide powders, are fed together into barrel #4 via a side feeder.

Barrel temperatures are selected based on melting points and/or softening points of the plastic and other TPV components. Barrel temperatures should be adjusted to avoid component decomposition.

After extrusion, strands are water cooled, pelletized, and dried.

Barrels #4 and #9 are vented to the atmosphere, and the screw design facilitates the formation of a melt seal on both sides of these barrels.

### Laboratory Batch Mixer

A Techmix 6 (RSI) or Haake Rheomix^{™} 3000 (Thermofisher) mixer with three heating zones is used and connected to an ATR Plasti-Corder (C.W. Brabender) torque rheometer for temperature and torque control. The three zones and the stock temperature are set at temperatures above the melting point of the plastic phase. The mixing conditions are as follows: 5-15 minutes of total mixing time, 65% fill factor, 50-150 RPM rotor speed for Banbury rotors. The plastic and the rubber are first added to the mixer and then the curative. The antioxidant, the plasticizer, and the other components (if any) can be added at any time during the mixing process.

### Single screw extrusion

TPV pellets are extruded into tapes using a single screw extruder, for physical property and process-ability testing. Tensile dumbbells are cut from the tapes. TPV pellets are also injection molded into tensile bars.

A Brabender single screw extruder (L/D =25, 3/4" screw) is used and connected to an RS-5000 (RSI) torque rheometer for temperature and torque control. The extruder includes three heated zones with a die, set at temperatures above the melting point of the plastic phase. The screw consists of a small Maddock mixing section, with the remaining sections being built-up of conveying elements.

### Injection molding

A Sumitomo Systec 90-310 injection molding machine having three heated zones and a nozzle, set at temperatures above the melting point of the plastic phase, is used for injection molding. Screw speed is 150 rpm, with different formulation dependent holding pressures, typically between 11-18 MPa.

### Property testing

Tensile (5 specimens) tests are conducted according to ASTM D638, respectively. The median test value is reported.

All quantities shown in the below tables are weight percentages unless otherwise specified. Although processing aids such as L4180 and Tafmer MA85105108 can be considered plastic materials, they are not counted in the calculations of the relative amounts of plastic in the formulations described below.

### Example 1

Plasticized TPV formulations compounded using Vestamid L2101F (PA 12, 39 parts) and Exxpro 3035 (BIMSM, 61 parts), with 1,3-PBO as curing agent, with two different processing aids (L4180 and Tafmer MA8510), are shown below in Table 1. These TPV formulations are prepared in the twin-screw extruder. The properties of these formulations and the processing conditions used to produce them are also presented in Table 1.

**Table 1. Formulations in Weight% for Vestamid L2101F/Exxpro 3035 TPVs Made on Twin-Screw Extruder, With Processing Aid.**

| | **Thermoplastic Vulcanizate (TPV) formulation** | |
|---|---|---|
| **Formulation No.** | **1** | **2** |
| Exxpro 3035 | 56.60 | 56.60 |
| PBO | 1.13 | 1.13 |
| Vestamid L2101F | 35.52 | 35.52 |
| L4180 | 2.00 | 0.00 |
| Tafmer MA8510 | 0.00 | 2.00 |
| Irganox 1098 | 1.13 | 1.13 |
| Zinc Oxide | 1.13 | 1.13 |
| BBSA | 2.48 | 2.48 |

| **Property** | | |
|---|---|---|
| Tape Extruded: Tensile Strength @ RT (MPa) | 22.48 | 22.14 |
| Tape Extruded: Elongation @ RT (%) | 367.30 | 377.40 |
| Injection Molded: Tensile Strength @ RT (MPa) | 19.42 | 20.78 |
| Injection Molded: Elongation @ RT (%) | 93.20 | 83.40 |

| **Twin-Screw Processing Conditions** | | |
|---|---|---|
| Screw Speed Range (RPM) | 100-400 | 100-400 |
| Feed rate Range (Ib/hr) | 15-75 | 15-75 |
| Average Torque (%) | 65 | 68 |

### Example 2

A plasticized TPV formulation compounded using AESNO P40 TL (PA 12, 40 parts) and Exxpro 3035 (BIMSM, 60 parts), with 1,3-PBO as curing agent is shown below in Table 3. This TPV formulation is prepared in a laboratory mixer. The formulation and the physical properties of the resulting PA 12/BIMSM TPV are shown below in Table 2.

**Table 2. Formulation in Weight% for AESNO P40 TL/Exxpro 3035 TPV Made on Laboratory Mixer, Without any Processing Aid.**

| | **Thermoplastic Vulcanizate (TPV) formulation** |
|---|---|
| **Formulation No.** | **4** |
| Exxpro 3035 | 59.11 |
| PBO | 0.59 |
| AESNO P40 TL | 39.41 |
| Antioxidant 405 | 0.89 |

| **Property** | |
|---|---|
| Tape Extruded: Tensile Strength @ RT (MPa) | 20.03 |
| Tape Extruded: Elongation @ RT (%) | 285.63 |

### Example 3

Plasticized TPV formulations compounded using Vestamid L2101F (PA 12) and Exxpro 3035 (BIMSM) at different rubber/plastic ratios (59/41, 57/43, 54/46, and 48/52), with 1,3-PBO as curing agent, with L4180 as a processing aid, are shown below in Table 4. These TPV formulations are prepared in the twin-screw extruder. The properties of these formulations and the processing conditions used to produce them are also presented in Table 3.

**Table 3. Formulations in Weight% for Vestamid L2101F/Exxpro 3035 TPVs Made on Twin-Screw Extruder, With Processing Aid.**

| | **Thermoplastic Vulcanizate (TPV) formulation** | | | |
|---|---|---|---|---|
| **Formulation No.** | **5** | **6** | **7** | **8** |
| Exxpro 3035 | 54.72 | 51.89 | 49.06 | 43.42 |
| PBO | 1.09 | 1.04 | 0.98 | 0.87 |
| Vestamid L2101F | 37.29 | 39.95 | 42.62 | 47.92 |
| L4180 | 2.10 | 2.25 | 2.40 | 2.70 |
| Irganox 1098 | 1.09 | 1.04 | 0.98 | 0.87 |
| Zinc Oxide | 1.09 | 1.04 | 0.98 | 0.87 |
| BBSA | 2.61 | 2.80 | 2.98 | 3.36 |

| **Property** | | | | |
|---|---|---|---|---|
| Tape Extruded: Tensile Strength @ RT (MPa) | 24.26 | 26.96 | 28.40 | 32.07 |
| Tape Extruded: Elongation @ RT (%) | 324.00 | 330.20 | 325.90 | 351.70 |

| **Twin-Screw Processinq Conditions** | | | | |
|---|---|---|---|---|
| Screw Speed Range (RPM) | 200-500 | 200-500 | 200-500 | 200-500 |
| Feed rate Range (Ib/hr) | 15-75 | 15-75 | 15-75 | 15-75 |
| Average Torque (%) | 57 | 58 | 60 | 61 |

### Comparative Example A

An unplasticized TPV formulation compounded using BESNO TL (PA 11, 40 parts) and Exxpro 3035 (BIMSM, 60 parts), with Zinc Stearate as curing agent is shown below in Table 2. This TPV formulation is prepared in a laboratory mixer. The formulation and the physical properties of the resulting PA 11/BIMSM TPV are shown below in Table A.

**Table A. Formulation in Weight% for BESNO TL/Exxpro 3035 TPV Made on Laboratory Mixer, Without any Processing Aid.**

| | **Thermoplastic Vulcanizate (TPV) formulation** |
|---|---|
| **Formulation No.** | **3** |
| Exxpro 3035 | 58.77 |
| Zinc Stearate | 1.18 |
| BESNO TL | 39.18 |
| Antioxidant 405 | 0.88 |

| **Property** | |
|---|---|
| Tape Extruded: Tensile Strength @ RT (MPa) | 15.73 |
| Tape Extruded: Elongation @ RT (%) | 302.95 |

Having described the thermoplastic vulcanizates and methods for preparing using the thermoplastic vulcanizates in detail and by reference to specific examples thereof, it will be apparent that modifications and variations are possible without departing from the scope of what is defined in the appended claims. More specifically, although some aspects of the present disclosure are identified herein as particularly advantageous, it is contemplated that the present disclosure is not necessarily limited to these particular aspects of the disclosure.

### Itemized list of embodiments:

1. A thermoplastic vulcanizate comprising a plastic phase and a rubber phase, wherein
   a) the plastic phase comprises from about 30 parts to about 95 parts by weight, based on 100 parts by weight of the plastic and rubber phases, of a semi-crystalline aliphatic polyamide having a melting point of about 160°C to about 260°C; and
   b) the rubber phase comprises from about 70 parts to about 5 parts, by weight based on 100 parts by weight of the plastic and rubber phases, of a brominated poly(isobutylene-co-para-methylstyrene) rubber; and
   c) crosslinks in the rubber.
2. A thermoplastic vulcanizate according to embodiment 1, wherein the crosslinks are formed by a reaction between an addition type curing agent and benzylic halide reactive groups in the brominated poly(isobutylene-co-para-methylstyrene) rubber.
3. A thermoplastic vulcanizate prepared by dynamically crosslinking a melt blend with an addition type curing agent, wherein the melt blend comprises a plastic phase and a rubber phase, and wherein
   the plastic phase comprises from about 30 parts to about 95 parts by weight, based on 100 parts by weight of the plastic and rubber phases, of a semi-crystalline aliphatic polyamide having a melting point of about 160°C to about 260°C; and
   the rubber phase comprises from about 70 parts to about 5 parts, by weight based on 100 parts by weight of the plastic and rubber phases, of a brominated poly(isobutylene-co-para-methylstyrene) rubber.
4. A thermoplastic vulcanizate according to embodiment 1 or embodiment 2, wherein
   the plastic phase comprises about 30 parts to about 70 parts by weight, based on 100 parts by weight of the plastic and rubber phases, of a semi-crystalline aliphatic polyamide having a melting point of about 160°C to about 260°C, and
   the rubber phase comprises from about 70 parts to about 30 parts, by weight based on 100 parts by weight of the plastic and rubber phases, of a brominated poly(isobutylene-co-para-methylstyrene) rubber.
5. A thermoplastic vulcanizate according to embodiment 1, wherein
   the plastic phase comprises about 70 parts to about 95 parts by weight, based on 100 parts by weight of the plastic and rubber phases, of the plastic, and the plastic is a semi-crystalline aliphatic polyamide having a melting point of about 160°C to about 260°C, and the rubber phase comprises from about 30 parts to about 5 parts, by weight based on 100 parts by weight of the plastic and rubber phases, of a brominated poly(isobutylene-co-para-methylstyrene) rubber.
6. A thermoplastic vulcanizate according to embodiment 1, wherein
   the plastic phase comprises about 30 parts to about 50 parts by weight, based on 100 parts by weight of the plastic and rubber phases, of a plastic, and the plastic is a semi-crystalline aliphatic polyamide having a melting point of about 160°C to about 260°C, and
   the rubber phase comprises from about 70 parts to about 50 parts, by weight based on 100 parts by weight of the plastic and rubber phases, of a brominated poly(isobutylene-co-para-methylstyrene) rubber.
7. A thermoplastic vulcanizate according to any one of embodiments 1-6, further comprising a plasticizer.
8. A thermoplastic vulcanizate according to embodiment 7, wherein the plasticizer is melt miscible with the rubber phase and/or the plastic phase.
9. A thermoplastic vulcanizate according to embodiment 7, wherein the plasticizer is capable of functioning as a plasticizer for one or both of the plastic phase or rubber phase at the plastic melt temperature.
10. A thermoplastic vulcanizate according to embodiment 7, wherein the plasticizer is selected from sulfonamides and benzoates.
11. A thermoplastic vulcanizate according to embodiment 7, wherein the amount of plasticizer in the thermoplastic vulcanizate is from about 4 parts to about 35 parts, based on 100 parts by weight of the plastic and rubber phases.
12. A thermoplastic vulcanizate according to embodiment 3, wherein the addition type curing agent is a multifunctional oxazoline or epoxide.
13. A thermoplastic vulcanizate according to embodiment 3 or embodiment 12, wherein the thermoplastic vulcanizate comprises from about 0.5 part to about 15 parts, based on 100 parts by weight of the plastic and rubber phases, of the addition type curing agent.
14. A thermoplastic vulcanizate according to any one of embodiments 3, 12 or 13, wherein the addition type curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or mixtures thereof.
15. A thermoplastic vulcanizate according to embodiment 1, further comprising a processing aid.
16. A thermoplastic vulcanizate according to embodiment 15, wherein the processing aid is selected from maleated polyolefin plastics and rubbers, or maleated vinylidene fluoride polymers or copolymers, and the thermoplastic vulcanizate comprises from about 4 to about 35 parts of the processing aid based on 100 parts of total rubber and plastic phases.
17. A thermoplastic vulcanizate according to embodiment 1 where greater than 80 weight per cent of the rubber is crosslinked.
18. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to any one of embodiments 1-17.
19. A tube or hose comprising at least one layer comprising a thermoplastic vulcanizate according to any one of embodiments 1-17.
20. A process for producing a thermoplastic vulcanizate comprising mixing a composition comprising a plastic phase and a rubber phase with an addition type curing agent, wherein the mixing is carried out under mixing conditions that produce an appropriate shear profile and at a temperature above the melting point of the plastic phase, and wherein
   the plastic phase comprises from about 30 parts to about 95 parts by weight, based on 100 parts by weight of the plastic and rubber phases, of a semi-crystalline aliphatic polyamide having a melting point of about 160°C to about 260°C; and
   the rubber phase comprises from about 70 parts to about 5 parts, by weight based on 100 parts by weight of the plastic and rubber phases, of a brominated poly(isobutylene-co-para-methylstyrene) rubber.
21. A process according to embodiment 20, wherein the rubber phase and the plastic phase are melt blended prior to the addition of the addition type curing agent.
22. A process according to embodiment 20, wherein the rubber phase and the plastic phase are melt blended while the addition type curing agent is added to the composition.
23. A thermoplastic elastomer comprising a plastic phase and a rubber phase, wherein
   a) the plastic phase comprises from about 30 parts to about 95 parts by weight, based on 100 parts by weight of the plastic and rubber phases, of a plastic having a melting point of about 160°C to about 260°C, wherein the plastic is a semi-crystalline aliphatic polyamide, and
   b) the rubber phase comprises from about 70 parts to about 5 parts, by weight based on 100 parts by weight of the plastic and rubber phases, of a brominated poly(isobutylene-co-para-methylstyrene) rubber; and
   c) an optional plasticizer, wherein the amount of plasticizer, when present, is up to about 35 parts, based on 100 parts by weight of the plastic and rubber phases.
24. A thermoplastic elastomer according to embodiment 23, further comprising an addition-type curing agent.

## Claims

1. A thermoplastic vulcanizate comprising a plastic phase and a rubber phase, wherein
a) the plastic phase comprises from about 30 parts to about 95 parts by weight, based on 100 parts by weight of the plastic and rubber phases, of a semi-crystalline aliphatic polyamide having a melting point of about 160°C to about 260°C; and
b) the rubber phase comprises from about 70 parts to about 5 parts, by weight based on 100 parts by weight of the plastic and rubber phases, of a brominated poly(isobutylene-co-para-methylstyrene) rubber; and
c) crosslinks in the rubber.

2. A thermoplastic vulcanizate according to claim 1, wherein the crosslinks are formed by a reaction between an addition type curing agent and benzylic halide reactive groups in the brominated poly(isobutylene-co-para-methylstyrene) rubber.

3. A thermoplastic vulcanizate according to claim 1 or claim 2, which is prepared by dynamically crosslinking a melt blend with an addition type curing agent, wherein the melt blend comprises the plastic phase and the rubber phase.

4. A thermoplastic vulcanizate according to any of claims 1-3, further comprising a plasticizer.

5. A thermoplastic vulcanizate according to claim 4, wherein the plasticizer is melt miscible with the rubber phase and/or the plastic phase or the plasticizer is capable of functioning as a plasticizer for one or both of the plastic phase or rubber phase at the plastic melt temperature.

6. A thermoplastic vulcanizate according to claim 4, wherein the plasticizer is selected from sulfonamides and benzoates.

7. A thermoplastic vulcanizate according to claim 2 or claim 3, wherein the addition type curing agent is a multifunctional oxazoline or epoxide.

8. A thermoplastic vulcanizate according to any of claims 2, 3 or 7, wherein the thermoplastic vulcanizate comprises from about 0.5 part to about 15 parts, based on 100 parts by weight of the plastic and rubber phases, of the addition type curing agent.

9. A thermoplastic vulcanizate according to any of claims 2, 3, 7 or 8 wherein the addition type curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or mixtures thereof.

10. A thermoplastic vulcanizate according to any of claims 1-9, further comprising a processing aid.

11. A thermoplastic vulcanizate according to claim 15, wherein the processing aid is selected from maleated polyolefin plastics and rubbers, or maleated vinylidene fluoride polymers or copolymers, and the thermoplastic vulcanizate comprises from about 4 to about 35 parts of the processing aid based on 100 parts of total rubber and plastic phases.

12. A thermoplastic vulcanizate according to any of claims 1-11 where greater than 80 weight per cent of the rubber is crosslinked.

13. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to any of claims 1-12.

14. A tube or hose comprising at least one layer comprising a thermoplastic vulcanizate according to any of claims 1-12.

15. A process for producing a thermoplastic vulcanizate according to claim 1 comprising mixing a composition comprising the plastic phase and the rubber phase with an addition type curing agent, wherein the mixing is carried out under mixing conditions that produce an appropriate shear profile and at a temperature above the melting point of the plastic phase.
